# EUROPEAN PATENT SPECIFICATION

(11) **EP 4 506 284 B1**
(45) Date of publication and mention of the grant of the patent: **05.08.2026**
(21) Application number: 23833992.3
(22) Date of filing: 21.06.2023
(51) Int. Cl.: B65G 47/90, B25J 5/02, B25J 15/08, H01M 10/04

(54) **LOADING DEVICE AND BATTERY MANUFACTURING SYSTEM**
LADEVORRICHTUNG UND BATTERIEHERSTELLUNGSSYSTEM
DISPOSITIF DE CHARGEMENT ET SYSTÈME DE FABRICATION DE BATTERIE

(43) Date of publication of application: 12.02.2025
(73) Proprietor: Contemporary Amperex Technology (Hong Kong) Limited, Central, Central And Western District (HK)
(72) Inventor: ZHANG, Chenlong, Ningde Fujian 352100 (CN); WU, Ying, Ningde Fujian 352100 (CN); LIAO, Shunlin, Ningde Fujian 352100 (CN)
(74) Representative: Rowlands, Stuart Michael
(86) International application number: PCT/CN2023/101878
(87) International publication number: WO 2024/259667

(56) References cited:
- CN-A- 111 740 146
- CN-A- 113 734 778
- CN-A- 113 734 778
- CN-A- 114 083 561
- CN-A- 114 083 561
- CN-A- 114 243 080
- CN-A- 114 243 080
- CN-U- 210 884 189
- CN-U- 212 461 771
- CN-U- 216 000 557
- CN-U- 216 000 557
- CN-U- 216 710 852
- CN-U- 216 710 852
- US-A1- 2002 153 735
- US-A1- 2002 153 735

## Description

### TECHNICAL FIELD

The present application relates to the technical field of power batteries, in particular to a feeding device and a battery manufacturing system.

### BACKGROUND

With popularization and promotion of new energy vehicles, charging and discharging performance and battery life of the new energy vehicles have increasingly attracted people's concern and attention. A power battery is a rechargeable battery that is a power source of the new energy vehicles and is widely applied in the field of the new energy vehicles.

In a battery manufacturing process, the battery is placed in foam for protection during material incoming, the battery needs to be picked out of the foam for a subsequent processing procedure, and the foam needs to be removed at the same time. In an existing feeding device, the battery and the foam are mostly picked and placed manually, which is low in picking and placing efficiency and easily damages the battery.

CN114083561A relates to a square battery cell variable-pitch grabbing clamp, which comprises a support frame, a plurality of battery cell gripper mechanisms, a variable-pitch mechanism, a variable-pitch driving mechanism, a foam grabbing mechanism, a distance measuring device, a visual mechanism and two foam pressing and bottom holding mechanisms, wherein the plurality of battery cell gripper mechanisms are movably connected to the support frame, and are arranged in a row along the X axis at equal intervals; the variable-pitch mechanism is connected to each battery cell gripper mechanism; the variable-pitch driving mechanism is fixed to the support frame, and the output end of the variable-pitch driving mechanism is connected to the variable-pitch mechanism; the foam grabbing mechanism is connected to the support frame; the distance measuring device is fixed on the support frame and is arranged downwards along the Z axis; the visual mechanism is fixed to the support frame and arranged downwards along the Z axis; and the two foam pressing and bottom holding mechanisms are connected to the support frame and are symmetrically arranged on the two sides of each battery cell gripper mechanism.

### SUMMARY OF THE INVENTION

In view of this, the present application discloses a feeding device and a battery manufacturing system.

A feeding device is used for picking and placing a protective part and a workpiece accommodated in the protective part. The feeding device includes a base, a first picking mechanism and a second picking mechanism. The first picking mechanism is arranged on the base and used for picking and placing the workpiece, and the second picking mechanism is arranged on the base and used for picking and placing the protective part. The above feeding device utilizes the first picking mechanism to pick and place the workpiece accommodated in the protective part, and can utilize the second picking mechanism to pick and place the protective part after removing the workpiece. The same feeding device can realize picking and placing both the workpiece and the protective part, which is beneficial to simplifying the structure of the feeding device and improving the picking and placing efficiency.

The base includes a first fixed plate and a second fixed plate perpendicular to the first fixed plate, the first picking mechanism is connected with the first fixed plate, and the second picking mechanism is connected with the second fixed plate. In this way, a space utilization rate of the base can be increased.

In some embodiments, the first picking mechanism includes at least two first picking and clamping jaws, all the first picking and clamping jaws are distributed side by side in a first direction and have an adjustable distance in the first direction, and the first direction is a width direction of the workpiece. In this way, the distance between the first picking and clamping jaws in the first direction can be adjusted, and when the plurality of workpieces are distributed side by side in the first direction, the first picking mechanism can simultaneously pick and place the plurality of workpieces at one time, thereby greatly improving the picking and placing efficiency of the workpieces.

In some embodiments, the first picking mechanism further includes a first driving part and an adjusting part, and the adjusting part is movably connected with the first picking and clamping jaws; and the first driving part is used for driving the adjusting part to move, and driving the first picking and clamping jaws to move in the first direction. In this way, as long as the first driving part is utilized to drive the adjusting part to move, each first picking and clamping jaw can be driven to move in the first direction, thereby realizing the adjustment of the distance between the first picking and clamping jaws in the first direction.

In some embodiments, the adjusting part includes guide wheels and track plates, the track plate is provided with a sliding groove corresponding to each first picking and clamping jaw, each first picking and clamping jaw is provided with the guide wheel, the guide wheels are slidably arranged in the corresponding sliding grooves, all the sliding grooves are distributed at intervals in a second direction, and the second direction is a thickness direction of the workpiece; and the first driving part is used for driving the track plate to move in the second direction, so that the guide wheel slides relative to the sliding grooves, and drive the first picking and clamping jaws to approach or move away from each other in the first direction. In this way, the first driving part is utilized to drive the track plate to move, so as to drive all the first picking and clamping jaws to move in the first direction. The different positions of the guide wheels in the sliding grooves will result in different distances between the first picking and clamping jaws, thereby making operation convenient.

In some embodiments, all the sliding grooves are in a straight, arc, wavy or zigzag shape. In this way, the sliding grooves can be flexibly arranged according to actual requirements, so as to meet different distance adjusting requirements.

In some embodiments, the first picking mechanism further includes a first guide rail fixed on the base, the first guide rail extends in the first direction, the guide wheel is arranged on the same side of each first picking and clamping jaw, and the side of each first picking and clamping jaw facing away from the guide wheel is slidably connected to the first guide rail. In this way, by arranging the first guide rail slidably connected with the first picking and clamping jaws, the first picking and clamping jaws can be moved along the first guide rail, so as to improve a situation that a horizontal moving direction of the first picking and clamping jaws is offset; and the guide wheel is arranged on the same side of each first picking and clamping jaw, and the side of each first picking and clamping jaw facing away from the guiding wheel is slidably connected to the first guide rail, which can make an overall structure of the first picking mechanism more compact.

In some embodiments, the feeding device further includes an auxiliary picking mechanism arranged on the base. When the first picking mechanism picks and places the workpiece, the auxiliary picking mechanism can switch between a pressing state of pressing the protective part and a holding state of holding a bottom side of the workpiece. In this way, before the first picking mechanism picks the workpiece out of the protective part, the auxiliary picking mechanism presses the protective part, thereby reducing the risk of the protective part being skewed and causing the workpiece to fall when the workpiece is picked out. After the first picking mechanism picks the workpiece out of the protective part, the auxiliary picking mechanism moves to the bottom side of the workpiece, and can hold the workpiece when the workpiece falls, thereby reducing the safety hazard caused by the workpiece falling.

In some embodiments, the auxiliary picking mechanism includes a moving platform and at least two probe rods, each probe rod is connected with the moving platform and can move along with the moving platform, all the probe rods are distributed side by side in a third direction intersecting the first direction, and the third direction is a length direction of the workpiece. In this way, the probe rods are driven to move by the moving platform, which can ensure that the probe rods are effectively pressed on the protective part, and meanwhile ensure that the probe rods can hold a bottom end of the workpiece.

In some embodiments, the moving platform includes a horizontal moving assembly and a lifting assembly, the lifting assembly is connected with the probe rods and is used for driving the probe rods to ascend and descend in the second direction, and the horizontal moving assembly is connected with the lifting assembly and used for driving the probe rods to horizontally move in the third direction. In this way, the lifting assembly drives the probe rods to ascend and descend in the second direction, and the horizontal moving assembly drives the probe rods to horizontally move in the third direction, so that the position adjustment of the probe rods is more flexible.

In some embodiments, all the probe rods are of at least one of a cylindrical structure and a prismatic structure. In this way, the shape of the probe rods can be flexibly configured according to different workpiece types, so that the probe rods have better adaptability.

In some embodiments, in the first direction, a dimension of the probe rods is greater than or equal to a dimension of the protective part. In this way, in the first direction, the dimension L1 of the probe rods is greater than or equal to the dimension L2 of the protective part, so that when the probe rods are in the pressing state, probe end portions are located on two sides of the protective part, thereby reducing the probability of the ends of the probe rods crushing the workpiece.

In some embodiments, the auxiliary picking mechanism further includes a position detecting part arranged on the base, the position detecting part is used for detecting the positions of the probe rods, and the position detecting part sends out a warning signal when the probe rods descend to a limit position. In this way, a situation that the workpiece will be crushed due to the descending of the probe rods can be relieved.

In some unclaimed examples, the second picking mechanism includes second picking and clamping jaws, the first picking mechanism is respectively provided with at least one second picking and clamping jaw on both sides in the first direction, and the distance between all the second picking and clamping jaws in the first direction is adjustable. In this way, the distance between all the second picking and clamping jaws in the first direction is adjustable, so that the second picking and clamping jaws on both sides in the first direction can clamp the protective part, so as to pick and place different sizes or types of protective parts.

In some unclaimed examples, the second picking mechanism further includes a second driving part, each second picking and clamping jaw is correspondingly provided with one second driving part, and the second driving parts are used for driving the second picking and clamping jaws to move in the first direction. In this way, as long as the second driving parts are utilized to drive the second picking and clamping jaws to move, each second picking and clamping jaw can be driven to move in the first direction, thereby realizing the adjustment of the distance between the first picking and clamping jaws in the first direction.

A battery manufacturing system includes the above feeding device. The above battery manufacturing system utilizes the first picking mechanism of the feeding device to pick and place the workpiece accommodated in the protective part, and can utilize the second picking mechanism to pick and place the protective part after removing the workpiece. The same feeding device can realize picking and placing both the workpiece and the protective part, which is beneficial to simplifying the structure of the feeding device and improving the picking and placing efficiency.

### DESCRIPTION OF DRAWINGS

Fig. 1 is a schematic diagram of a protective part and a workpiece in an embodiment;
Fig. 2 is a schematic diagram of a feeding device in an embodiment;
Fig. 3 is a partial enlarged view at position A of the feeding device shown in Fig. 2; and
Fig. 4 is a front view of the feeding device shown in Fig. 2.

### Description of reference numerals:

10. Protective part; 11. Accommodating groove; 20. Workpiece; 100. Base; 110. First fixed plate; 120. Second fixing portion; 200. First picking mechanism; 210. First picking and clamping jaw; 220, First driving part; 230, Adjusting part; 231, Guide wheel; 232, Track plate; 233, Sliding groove; 240, First guide rail; 300, Second picking mechanism; 310, Second picking and clamping jaw; 320, Second driving part; 400, Auxiliary picking mechanism; 410, Moving platform; 420, Probe rod.

### DETAILED DESCRIPTION

In order to make the above purpose, features and advantages of the present application more obvious and understandable, the specific implementations of the present application will be described in detail below with reference to the accompanying drawings. In the following description, numerous specific details are set forth to provide a thorough understanding of the present application. However, the present application can be implemented in many other ways different from those described here, and those skilled in the art can make similar improvements without departing from the scope of the appended claims so the present application is not limited by the specific embodiments disclosed below.

In the description of the present application, it should be understood that the orientation or positional relationships indicated by the terms "central," "longitudinal," "transverse," "length," "width," "thickness," "upper," "lower," "front," "rear," "left," "right," "vertical," "horizontal," "top," "bottom," "inner," "outer," "clockwise," "anticlockwise," "axial," "radial," "circumferential," etc. are based on the orientation or positional relationships shown in the accompanying drawings and are only for facilitating the description of the present application and simplifying the description, rather than indicating or implying that the device or element referred to must have a particular orientation or be constructed and operated in a particular orientation, and therefore will not be interpreted as limiting the present application.

In addition, the terms "first" and "second" are only for the purpose of description, and cannot be understood as indicating or implying relative importance or implicitly indicating the quantity of the indicated technical features. Therefore, the features defined as "first" and "second" may explicitly or implicitly include at least one of the features. In the description of the present application, the meaning of "a plurality of" is two or more, for example, two or three, unless otherwise explicitly and specifically defined.

In the present application, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interiors of two elements or the interaction of two elements, unless otherwise expressly specified. For those of ordinary skill in the art, the specific meanings of the above terms in the present application can be understood according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over," "above" and "on top of' the second feature may be a case that the first feature is directly above or obliquely above the second feature, or only means that the level of the first feature is higher than that of the second feature. The expression the first feature being "below", "underneath" or "under" the second feature may be a case that the first feature is directly underneath or obliquely underneath the second feature, or only means that the level of the first feature is lower than that of the second feature.

It should be noted that when a component is referred to as "fixed to" or "arranged to" another component, it may be directly on the other component or there may be a centered component. When one component is considered to be "connected" to another component, it may be directly connected to another component or there may be a centered component at the same time. The terms "vertical", "horizontal", "upper", "lower", "left", "right" and similar expressions used herein are for illustrative purposes only, and do not indicate that they are the only means of implementation.

With popularization and promotion of new energy vehicles, charging and discharging performance and battery life of the new energy vehicles have increasingly attracted people's concern and attention. A power battery is a rechargeable battery that is a power source of the new energy vehicles and is widely applied in the field of the new energy vehicles.

In a battery manufacturing process, the battery is placed in foam for protection during material incoming, the battery needs to be picked out of the foam for a subsequent processing procedure, and the foam needs to be removed at the same time. In an existing feeding device, the battery and the foam are mostly picked and placed manually, which is low in picking and placing efficiency and easily damages the battery.

Based on the above consideration, a feeding device is designed, a first picking mechanism is utilized to pick and place a workpiece accommodated in a protective part, and a second picking mechanism can be utilized to pick and place the protective part after removing the workpiece. The same feeding device can realize picking and placing both the workpiece and the protective part, which is beneficial to simplifying the structure of the feeding device and improving the picking and placing efficiency.

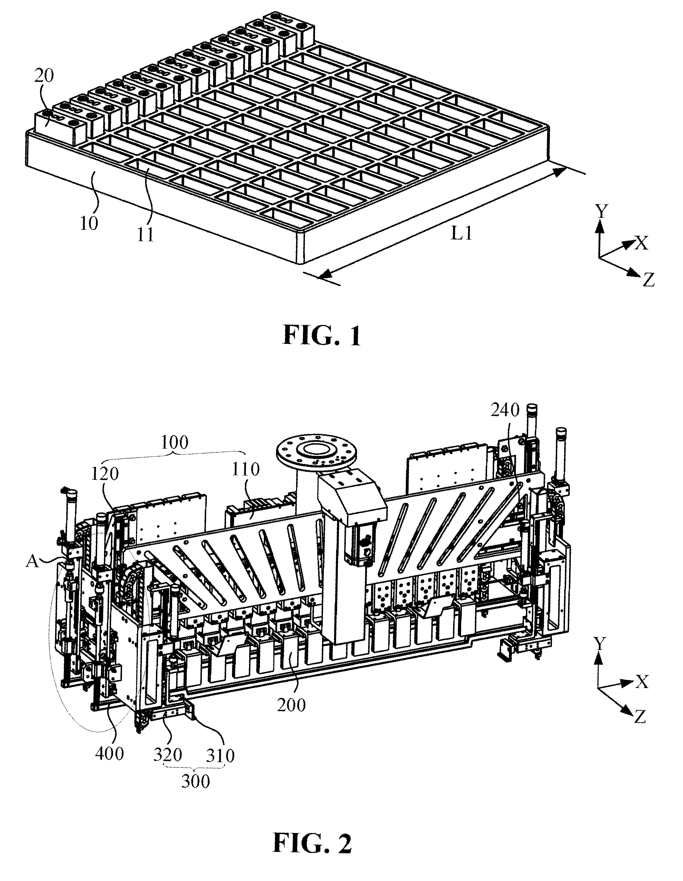

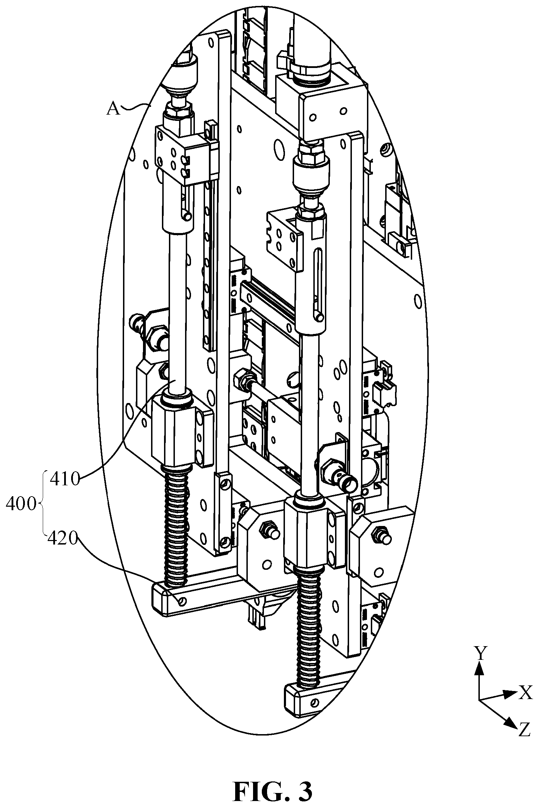

Please refer to Fig. 1; a feeding device in an embodiment is used for picking and placing a protective part 10 and a workpiece 20 accommodated in the protective part 10. Referring to Fig. 2 and Fig. 3, the feeding device includes a base 100, a first picking mechanism 200 and a second picking mechanism 300. The first picking mechanism 200 is arranged on the base 100 and used for picking and placing the workpiece 20, and the second picking mechanism 300 is arranged on the base 100 and used for picking and placing the protective part 10.

In the embodiment of the present application, the base 100 is configured as a structural part for the installation of the first picking mechanism 200, the second picking mechanism 300 and other mechanisms. Optionally, the base 100 may be an integral structure or a split structure composed of a plurality of fixed plates, and the specific form and type of the base 100 are not limited here.

In the embodiment of the present application, the first picking mechanism 200 is configured as a component for picking and placing the workpiece 20 to realize feeding and discharging of the workpiece 20. Optionally, the first picking mechanism 200 is a picking structure that can be a clamping block, a manipulator or of other types, and the number of the first picking mechanisms 200 is not limited to one. Here, the type and number of the first picking mechanism 200 is not specifically limited.

In the embodiment of the present application, the second picking mechanism 300 is configured as a component for picking and placing the protective part 10 to realize feeding and discharging of the protective part 10. Optionally, the second picking mechanism 300 is a picking structure that can be a clamping block, a manipulator or of other types, and the number of the second picking mechanisms 300 is not limited to one. Here, the type and number of the second picking mechanism 300 is not specifically limited.

In the embodiment of the present application, the workpiece 20 is a battery, and the battery may be square or cylindrical. Specifically, the battery includes a box and battery cells. The battery cells are accommodated in the box. There can be the plurality of battery cells. The plurality of battery cells may be connected in series or in parallel or in both series and parallel. Series and parallel connection means that there are both series and parallel connections in the battery cells. The plurality of battery cells can be directly connected in series or in parallel or in both series and parallel, and then the whole composed of the plurality of battery cells is accommodated in the box. In some embodiments, the battery can also be in a form that the plurality of battery cells are connected in series, in parallel or in both series and parallel first to form battery modules, and then the plurality of battery modules are connected in series, in parallel or in both series and parallel form a whole and accommodated in the box.

In the embodiment of the present application, referring to Fig. 1, the protective part 10 is foam and has an accommodating groove 11, and the battery is placed in the accommodating groove 11. Specifically, the accommodating groove 11 may be square or cylindrical, and the number of the accommodating groove 11 is not limited to one. When there are at least two accommodating grooves 11, all the accommodating grooves 11 may be in the form of a square matrix, a circular matrix or other arrays.

It should be noted that at a feeding station, the protective part 10 is wrapped around the battery to protect the battery; and the battery needs to be picked out of the protective part 10 and transferred to a first discharging station before performing the subsequent battery processing procedure, and the protective part 10 needs to be transferred to a second discharging station at the same time.

The above feeding device utilizes the first picking mechanism 200 to pick and place the workpiece 20 accommodated in the protective part 10, and can utilize the second picking mechanism 300 to pick and place the protective part 10 after removing the workpiece 20. The same feeding device can realize picking and placing both the workpiece 20 and the protective part 10, which is beneficial to simplifying the structure of the feeding device and improving the picking and placing efficiency.

According to the present application, please refer to Fig. 2, the base 100 includes a first fixed plate 110 and a second fixed plate 120 perpendicular to the first fixed plate 110, the first picking mechanism 200 is connected with the first fixed plate 110, and the second picking mechanism 300 is connected with the second fixing plate 120.

In the embodiment of the present application, the first fixed plate 110 and the second fixed plate 120 may be rectangular, circular or other shapes. Here, the shapes of the first fixed plate 110 and the second fixed plate 120 are not specifically limited. The first fixed plate 110 and the second fixed plate 120 may or may not be connected.

Through the above arrangement, a space utilization rate of the base 100 can be increased.

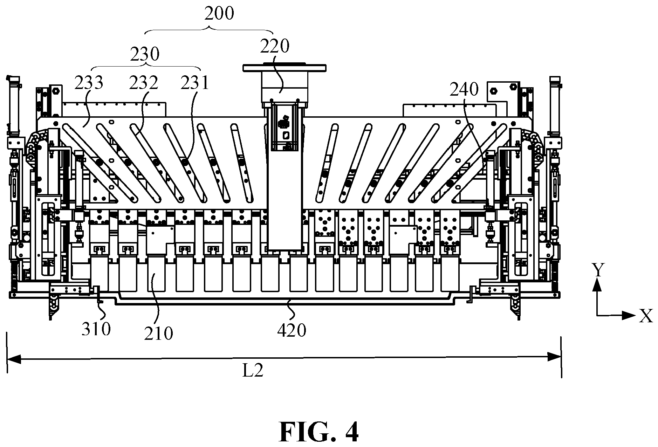

According to some embodiments in the present application, please refer to Fig. 2 and Fig. 4, the first picking mechanism 200 includes at least two first picking and clamping jaws 210, all the first picking and clamping jaws 210 are distributed side by side in a first direction and have an adjustable distance in the first direction, and the first direction is a width direction of the workpiece 20.

Here, the first direction is an X direction shown in Fig. 4. When the plurality of workpieces 20 are distributed side by side in the first direction, the distance between the first picking and clamping jaws 210 in the first direction can be adjusted, so as to simultaneously pick and place the plurality of workpieces 20 at one time.

In the embodiment of the present application, each first picking and clamping jaw 210 is a clamping jaw cylinder, and each first picking and clamping jaw 210 can grab one workpiece 20 at a time. In other embodiments, each first picking and clamping jaw 210 may also be a vacuum adsorption clamping jaw or other types of picking structures.

Through the above arrangement, the distance between the first picking and clamping jaws 210 in the first direction can be adjusted, and when the plurality of workpieces 20 are distributed side by side in the first direction, the first picking mechanism 200 can simultaneously pick and place the plurality of workpieces 20 at one time, thereby greatly improving the picking and placing efficiency of the workpieces 20.

According to some embodiments of the present application, and referring to Fig. 4, the first picking mechanism 200 further includes a first driving part 220 and an adjusting part 230, and the adjusting part 230 is movably connected with the first picking and clamping jaws 210; and the first driving part 220 is used for driving the adjusting part 230 to move, and driving the first picking and clamping jaws 210 to move in the first direction.

In the embodiment of the present application, the first driving part 220 is configured as a component for driving the adjusting part 230 to move. Specifically, the first driving part 220 is an air cylinder, a screw rod or other structure capable of driving the adjusting part 230 to move.

In the embodiment of the present application, the adjusting part 230 is configured as a component that can be driven by the first driving part 220 and drives the first picking and clamping jaws 210 to move in the first direction. Optionally, the adjusting part 230 may be a cam variable-pitch adjusting plate.

Through the above arrangement, as long as the first driving part 220 is utilized to drive the adjusting part 230 to move, each first picking and clamping jaw 210 can be driven to move in the first direction, thereby realizing the adjustment of the distance between the first picking and clamping jaws 210 in the first direction.

According to some embodiments in the present application, and referring to Fig. 4, the adjusting part 230 includes guide wheels 231 and track plates 232, the track plate 232 is provided with a sliding groove 233 corresponding to each first picking and clamping jaw 210, each first picking and clamping jaw 210 is provided with the guide wheel 231, the guide wheels 231 are slidably arranged in the corresponding sliding grooves 233, all the sliding grooves 233 are distributed at intervals in a second direction, and the second direction is a thickness direction of the workpiece; and the first driving part 220 is used for driving the track plate 232 to move in the second direction, so that the guide wheel 231 slides relative to the sliding grooves 233, and drive the first picking and clamping jaws 210 to approach or move away from each other in the first direction.

Here, the second direction is the Y direction shown in Fig. 4, that is, the thickness direction of the workpiece 20. The sliding grooves 233 are distributed radially at intervals in the second direction, that is, in the second direction, the sliding grooves 233 are gradually inclined from the central position to two sides.

For example, when the first driving part 220 drives the track plate 232 to move up in the second direction, the sliding grooves 233 move up relative to the guide wheels 231, and the guide wheels 231 slide in the sliding grooves 233, so as to drive the first picking and clamping jaws 210 to move away from each other in the first direction; and when the first driving part 220 drives the track plate 232 to move down in the second direction, the sliding grooves 233 move down relative to the guide wheels 231, and the guide wheels 231 slide in the sliding grooves 233, so as to drive the first picking and clamping jaws 210 to approach each other in the first direction.

In the embodiment of the present application, at least one guide wheel 231 is arranged on each first picking and clamping jaw 210 in a protruding mode. When the number of the guide wheels 231 is at least two, all the guide wheels 231 may be arranged side by side on the same first picking and clamping jaw 210.

In the embodiment of the present application, the track plate 232 may be rectangular, oval or other shapes. Here, the specific shape of the track plate 232 is not limited.

Through the above arrangement, the first driving part 220 is utilized to drive the track plate 232 to move, so as to drive all the first picking and clamping jaws 210 to move in the first direction. The different positions of the guide wheels 231 in the sliding grooves 233 will result in different distances between the first picking and clamping jaws 210, thereby making operation convenient.

According to some embodiments in the present application, and referring to Fig. 4, all the sliding grooves 233 are in a straight, arc, wavy or zigzag shape.

In the embodiment of the present application, all the slide grooves 233 have the same shape. In other embodiments, all the slide grooves 233 have the different shapes.

Through the above arrangement, the sliding grooves 233 can be flexibly arranged according to actual requirements, so as to meet different distance adjusting requirements.

According to some embodiments in the present application, and referring to Fig. 1, the first picking mechanism 200 further includes a first guide rail 240 fixed on the base 100, the first guide rail 240 extends in the first direction, the guide wheel 231 is arranged on the same side of each first picking and clamping jaw 210, and the side of each first picking and clamping jaw 210 facing away from the guide wheel 231 is slidably connected to the first guide rail 240.

It can be understood that when the first driving part 220 drives the track plate 232 to move, the guide wheels 231 slide in the sliding grooves 233, and drives each first picking and clamping jaw 210 to move along the first guide rail 240, and the first guide rail 240 plays a guiding role.

In the embodiment of the present application, the number of the first guide rail 240 is not limited to one, that is, the number of the first guide rail 240 may be at least two, and all the first guide rails 240 may be distributed in parallel and at intervals.

Through the above arrangement, by arranging the first guide rail 240 slidably connected with the first picking and clamping jaws 210, the first picking and clamping jaws 210 can be moved along the first guide rail 240, so as to improve a situation that a horizontal moving direction of the first picking and clamping jaws 210 is offset; and the guide wheel 231 is arranged on the same side of each first picking and clamping jaw 210, and the side of each first picking and clamping jaw 210 facing away from the guiding wheel 231 is slidably connected to the first guide rail 240, which can make an overall structure of the first picking mechanism 200 more compact.

According to some embodiments in the present application, and referring to Fig. 2 and Fig. 3, the feeding device further includes an auxiliary picking mechanism 400 arranged on the base 100. When the first picking mechanism 200 picks and places the workpiece 20, the auxiliary picking mechanism 400 can switch between a pressing state of pressing the protective part 10 and a holding state of holding a bottom side of the workpiece.

It can be understood that, on the one hand, when the first picking mechanism 200 picks the workpiece 20 out of the protective part 10, since the protective part 10 is wrapped around the workpiece 20, it is very easy to be skewed and cause the workpiece 20 to fall; and on the other hand, when the first picking mechanism 200 picks out and clamps the workpiece 20 from the protective part 10, there is a risk that the workpiece 20 falls.

In the embodiment of the present application, the number of the auxiliary picking mechanism 400 is not limited to one, that is, the number of the auxiliary picking mechanism 400 may be at least two.

Through the above arrangement, before the first picking mechanism 200 picks the workpiece 20 out of the protective part 10, the auxiliary picking mechanism 400 presses the protective part 10, thereby reducing the risk of the protective part 10 being skewed and causing the workpiece 20 to fall when the workpiece 20 is picked out. After the first picking mechanism 200 picks the workpiece 20 out of the protective part 10, the auxiliary picking mechanism 400 moves to the bottom side of the workpiece 20, and can hold the workpiece 20 when the workpiece 20 falls, thereby reducing the safety hazard caused by the workpiece 20 falling.

According to some embodiments in the present application, and referring to Fig. 3, the auxiliary picking mechanism 400 includes a moving platform 410 and at least two probe rods 420, each probe rod 420 is connected with the moving platform 410 and can move along with the moving platform 410, all the probe rods 420 are distributed side by side in a third direction intersecting the first direction, and the third direction is a length direction of the workpiece 20.

### Here, the third direction is a Z direction shown in Fig. 3.

It can be understood that the probe rods 420 are driven by the moving platform 410 to switch between a pressing station and a holding station. When the probe rods 420 are in the pressing state, the probe rods 420 are pressed on a top side of the protective part 10 in the second direction and are located on an outer side of the workpiece 20 in the third direction, at this time, the probe rods 420 are in the pressing station, and the probe rods 420 can press the protective part 10 to reduce the risk of the workpiece 20 falling; and when the probe rods 420 are in the holding state, the probe rods 420 are located at a bottom side of the workpiece 20 in the second direction and are located at an inner side of the workpiece 20 in the third direction, at this time, the probe rods 420 are in the holding station, and the probe rods 420 can hold the workpiece 20 when the workpiece 20 falls, thereby reducing the potential safety hazard generated when the workpiece 20 falls.

In the embodiment of the present application, the moving platform 410 is configured as a mechanical structure capable of driving the probe rods 420 to move. Movement may be only a lifting motion, or a horizontal moving motion, or both the lifting motion and the horizontal moving motion. The moving platform 410 can be detachably fixed on the base 100, and can also be non-detachably fixed on the base 100.

In the embodiment of the present application, the probe rods 420 are configured as a component capable of pressing the protective part 10 or holding the workpiece 20. Since the probe rods 420 need to have rigidity and certain toughness, materials of the probe rods 420 are forged steel. The number of the probe rods 420 is not limited to one, the shape of the probe rods 420 may be cylindrical or prismatic, and the number and shape of the probe rods 420 are not specifically limited here.

Through the above arrangement, the probe rods 420 are driven to move by the moving platform 410, which can ensure that the probe rods 420 are effectively pressed on the protective part 10, and meanwhile ensure that the probe rods 420 can hold a bottom end of the workpiece 20.

According to some embodiments in the present application, and referring to Fig. 3, the moving platform 410 includes a horizontal moving assembly and a lifting assembly, the lifting assembly is connected with the probe rods 420 and is used for driving the probe rods 420 to ascend and descend in the second direction, and the horizontal moving assembly is connected with the lifting assembly and used for driving the probe rods 420 to horizontally move in the third direction.

In the embodiment of the present application, the lifting assembly includes a lifting drive part, a lifting slide rail and a lifting block, the lifting slide rail extends in the second direction, the sliding block is slidably arranged on the lifting slide rail, and the lifting drive part is connected with the lifting block and drives the lifting block to slide along the lifting slide rail, so that the lifting assembly drives the probe rods 420 to ascend and descend in the second direction. wherein the lifting slide rail is connected with the horizontal moving assembly. Optionally, the lifting drive part is a motor or an air cylinder.

In the embodiment of the present application, the horizontal moving assembly includes a horizontal moving drive part, a horizontal moving slide rail and a horizontal moving block, the horizontal moving slide rail extends in the third direction, the horizontal moving block is slidably arranged on the horizontal moving slide rail, and the horizontal moving drive part is connected with the horizontal moving block and drives the horizontal moving block to slide along the horizontal moving slide rail, so that the horizontal moving assembly drives the probe rods 420 to horizontally move in the third direction. wherein the horizontal moving slide rail is connected with the lifting slide rail. Optionally, the horizontal moving drive part is a motor or an air cylinder.

Through the above arrangement, the lifting assembly drives the probe rods 420 to ascend and descend in the second direction, and the horizontal moving assembly drives the probe rods 420 to horizontally move in the third direction, so that the position adjustment of the probe rods 420 is more flexible.

According to some embodiments in the present application, and referring to Fig. 3, all the probe rods 420 are of at least one of a cylindrical structure and a prismatic structure.

In the embodiment of the present application, all the probe rods 420 have the same shape, for example, all the probe rods 420 are cylindrical. In other embodiments, the shapes of all the probe rods 420 may not be exactly the same, for example, a part of the probe rods 420 is cylindrical, and another part of the probe rods 420 is prismatic.

Through the above arrangement, the shapes of the probe rods 420 can be flexibly configured according to different types of the workpieces 20, so that the probe rods 420 have better adaptability.

According to some embodiments of the present application, and referring to Fig. 4 and FIG. 1, in the first direction, a dimension L2 of the probe rods 420 is greater than or equal to a dimension L1 of the protective part 10.

It can be understood that, in the first direction, if the dimension L2 of the probe rods 420 is smaller than the dimension L1 of the protective part 10, when the probe rods 420 are in the pressing state, the probe rods 420 can only be partially pressed on the top side of the protective part 10, and the ends of the probe rods 420 are easily placed on the workpiece 20 inside the protective part 10, so that the workpiece 20 is abraded or damaged.

Through the above arrangement, in the first direction, the dimension L2 of the probe rods 420 is greater than or equal to the dimension L1 of the protective part 10, so that when the probe rods 420 are in the pressing state, probe end portions are located on two sides of the protective part 10, thereby reducing the probability of the ends of the probe rods 420 crushing the workpiece 20.

According to some embodiments in the present application, and referring to Fig. 2, the auxiliary picking mechanism 400 further includes a position detecting part arranged on the base 100, the position detecting part is used for detecting the positions of the probe rods 420, and the position detecting part sends out a warning signal when the probe rods 420 descend to a limit position.

It can be understood that, when the probe rods 420 are in the pressing state, the lifting assembly drives the probe rods 420 to ascend and descend in the second direction. In addition to controlling the probe rods 420 to descend to the limit position through the lifting assembly, the position detecting part can also assist in controlling the positions of the probe rods 420. When the probe rods 420 descend to the limit position, the position detecting part can send out a warning signal, so as to prevent the probe rods 420 from crushing the workpiece.

Optionally, the position detecting part is a sensor, and the sensor may be a position sensor or a composite sensor, and the type of the sensor is not limited here.

Through the above arrangement, a situation that the workpiece will be crushed due to the descending of the probe rods 420 can be relieved.

According to some unclaimed examples, and referring to Fig.2, the second picking mechanism 300 includes second picking and clamping jaws 310, the first picking mechanism 200 is respectively provided with at least one second picking and clamping jaw 310 on both sides in the first direction, and the distance between all the second picking and clamping jaws 310 in the first direction is adjustable.

In the embodiment of the present application, each second picking and clamping jaw 310 is a clamping jaw cylinder, and the second picking and clamping jaws 310 on the two sides in the first direction can grab one protective part 10 at a time. In other embodiments, each second picking and clamping jaw 310 may also be a vacuum adsorption clamping jaw or other types of picking structures.

Through above arrangement, the distance between all the second picking and clamping jaws 310 in the first direction is adjustable, so that the second picking and clamping jaws 310 on both sides in the first direction can clamp the protective part 10, so as to pick and place different sizes or types of protective parts 10.

According to some unclaimed examples, and referring to Fig. 2, the second picking mechanism 300 further includes a second driving part 320, each second picking and clamping jaw 310 is correspondingly provided with one second driving part 320, and the second driving parts 320 are used for driving the second picking and clamping jaws 310 to move in the first direction.

In the embodiment of the present application, the second driving parts 320 are configured as components for driving the second picking and clamping jaws 310 to move. Specifically, the second driving parts 320 are air cylinders, screw rods or other structures capable of driving the second picking and clamping jaws 310 to move.

Through above arrangement, as long as the second driving parts 320 are utilized to drive the second picking and clamping jaws 310 to move, each second picking and clamping jaw 310 can be driven to move in the first direction, thereby realizing the adjustment of the distance between the second picking and clamping jaws 310 in the first direction.

Please refer to Fig. 1; a battery manufacturing system in an embodiment includes the above feeding device.

It should be noted that, in addition to the feeding device, the above battery manufacturing system further includes a detecting device, a discharging device and other devices to realize the processing and production of the workpiece 20.

The above battery manufacturing system utilizes a first picking mechanism 200 of the feeding device to pick and place a workpiece 20 accommodated in a protective part 10, and can utilize a second picking mechanism 300 to pick and place the protective part 10 after removing the workpiece 20. The same feeding device can realize picking and placing both the workpiece 20 and the protective part 10, which is beneficial to simplifying the structure of the feeding device and improving the picking and placing efficiency.

According to some embodiments in the present application, and referring to Fig. 1 to Fig. 4, the feeding device in an embodiment includes a base 100, a first picking mechanism 200, a second picking mechanism 300 and an auxiliary picking mechanism 400, the first picking mechanism 200 is arranged on the base 100 and is used for picking and placing the workpiece 20, and the second picking mechanism 300 is arranged on the base 100 and is used for picking and placing the protective part 10. When the first picking mechanism 200 picks and places a battery, the auxiliary picking mechanism 400 can switch between a pressing state of pressing the protective part 10 and a holding state of holding a bottom side of the workpiece 20.
wherein the first picking mechanism 200 includes at least two first picking and clamping jaws 210, a first driving part 220, guide wheels 231, a track plate 232 and a first guide rail 240, all the first picking and clamping jaws 210 are distributed side by side in a first direction and are provided with the guide wheels 231, the track plate 232 is provided with sliding grooves 233 corresponding to the first picking and clamping jaws 210, the guide wheels 231 are slidably arranged in the corresponding sliding grooves 233, all the sliding grooves 233 are radially distributed at intervals and linearly in the second direction, and the first driving part 220 is used for driving the track plate 232 to move in the second direction, so as to drive the first picking and clamping jaws 210 to approach or move away from each other on the first guide rail 240. The auxiliary picking mechanism 400 includes a moving platform 410 and at least two probe rods 420, the moving platform 410 includes a horizontal moving assembly and a lifting assembly, the lifting assembly is connected with the probe rods 420 and is used for driving the probe rods 420 to ascend and descend in the second direction, and the horizontal moving assembly is connected with the lifting assembly and used for driving the probe rods 420 to horizontally move in the third direction. All the probe rods 420 are of cylindrical structures and are in the first direction, and the dimension of the probe rods 420 is greater than or equal to the dimension of the protective part 10.
wherein the second picking mechanism 300 includes second picking and clamping jaws 310 and second driving parts 320, the first picking mechanism 200 is respectively provided with at least one second picking and clamping jaw 310 on both sides in the first direction, each second picking and clamping jaw 310 is correspondingly provided with one second driving part 320, and the second driving parts 320 are used for driving the second picking and clamping jaws 310 to move in the first direction.

According to some embodiments in the present application, and referring to Fig. 1, a battery manufacturing system in an embodiment includes the above feeding device. The technical features of the above embodiments can be combined within the scope of the appended claims. In order to make the description concise, not all possible combinations of the technical features in the above embodiments are described. However, all the combinations of the technical features should be considered as falling within the scope of the appended claims.

The above embodiments only express several implementations of the present application, and the description thereof is specific and detailed, but cannot therefore be understood as a limitation on the patent scope of the present application. It should be noted that those of ordinary skill in the art may further make variations and improvements without departing from the concept of the present application. Therefore, the patent protection scope of the present application should be subject to the appended claims.

## Claims

1. A feeding device, used for picking and placing a protective part (10) and a workpiece (20) accommodated in the protective part (10), and comprising:
a base (100);
a first picking mechanism (200), arranged on the base (100) and used for picking and placing the workpiece (20); and
a second picking mechanism (300), arranged on the base (100) and used for picking and placing the protective part (10);
the feeding device being **characterized in that** the base (100) comprises a first fixed plate (110) and a second fixed plate (120) perpendicular to the first fixed plate (110), the first picking mechanism (200) is connected with the first fixed plate (110), and the second picking mechanism (300) is connected with the second fixed plate (120).

2. The feeding device according to claim 1, wherein the first picking mechanism (200) comprises at least two first picking and clamping jaws (210), all the first picking and clamping jaws (210) are distributed side by side in a first direction and have an adjustable distance in the first direction, and the first direction is a width direction of the workpiece (20).

3. The feeding device according to claim 2, wherein the first picking mechanism (200) further comprises a first driving part (220) and an adjusting part (230), and the adjusting part (230) is movably connected with the first picking and clamping jaws (210); and the first driving part (220) is used for driving the adjusting part (230) to move, and driving the first picking and clamping jaws (210) to move in the first direction.

4. The feeding device according to claim 3, wherein the adjusting part (230) comprises guide wheels (231) and track plates (232), the track plate (232) is provided with a sliding groove (233) corresponding to each first picking and clamping jaw (210), each first picking and clamping jaw (210) is provided with the guide wheel (231), the guide wheels (231) are slidably arranged in the corresponding sliding grooves (233), all the sliding grooves (233) are distributed at intervals in a second direction, and the second direction is a thickness direction of the workpiece (20); and
the first driving part (220) is used for driving the track plate (232) to move in the second direction, so that the guide wheel (231) slides relative to the sliding groove (233), and drive the first picking and clamping jaws (210) to approach or move away from each other in the first direction.

5. The feeding device according to claim 4, wherein all the sliding grooves (233) are in a straight, arc, wavy or zigzag shape.

6. The feeding device according to claim 4, wherein the first picking mechanism (200) further comprises a first guide rail (240) fixed on the base (100), the first guide rail (240) extends in the first direction, the guide wheel (231) is arranged on the same side of each first picking and clamping jaw (210), and the side of each first picking and clamping jaw (210) facing away from the guide wheel (231) is slidably connected to the first guide rail (240).

7. The feeding device according to claim 4, wherein the feeding device further comprises an auxiliary picking mechanism (400) arranged on the base (100), and when the first picking mechanism (200) picks and places the workpiece (20), the auxiliary picking mechanism (400) can switch between a pressing state of pressing the protective part (10) and a holding state of holding a bottom side of the workpiece (20).

8. The feeding device according to claim 7, wherein the auxiliary picking mechanism (400) comprises a moving platform (410) and at least two probe rods (420), each probe rod (420) is connected with the moving platform (410) and can move along with the moving platform (410), all the probe rods (420) are distributed side by side in a third direction intersecting the first direction, and the third direction is a length direction of the workpiece (20).

9. The feeding device according to claim 8, wherein the moving platform (410) comprises a horizontal moving assembly and a lifting assembly, the lifting assembly is connected with the probe rods (420) and is used for driving the probe rods (420) to ascend and descend in the second direction, and the horizontal moving assembly is connected with the lifting assembly and used for driving the probe rods (420) to horizontally move in the third direction.

10. The feeding device according to claim 8 or 9, wherein all the probe rods (420) are of at least one of a cylindrical structure and a prismatic structure.

11. The feeding device according to any one of claims 8 to 10, wherein in the first direction, a dimension of the probe rods (420) is greater than or equal to a dimension of the protective part (10).

12. The feeding device according to any one of claims 7 to 10, wherein the auxiliary picking mechanism (400) further comprises a position detecting part arranged on the base (100), the position detecting part is used for detecting positions of the probe rods (420), and the position detecting part sends out a warning signal when the probe rods (420) descend to a limit position.

13. A battery manufacturing system, comprising the feeding device according to any one of claims 1 to 12.

## Patentansprüche

1. Beschickungsvorrichtung, die zum Aufnehmen und Platzieren eines Schutzteils (10) und eines Werkstücks (20), das in dem Schutzteil (10) untergebracht ist, verwendet wird und Folgendes umfasst:
eine Basis (100),
einen ersten Aufnahmemechanismus (200), der an der Basis (100) angeordnet ist und zum Aufnehmen und Platzieren des Werkstücks (20) verwendet wird, und
einen zweiten Aufnahmemechanismus (300), der an der Basis (100) angeordnet ist und zum Aufnehmen und Platzieren des Schutzteils (10) verwendet wird,
wobei die Beschickungsvorrichtung **dadurch gekennzeichnet ist, dass** die Basis (100) eine erste ortsfeste Platte (110) und eine zweite ortsfeste Platte (120) senkrecht zu der ersten ortsfesten Platte (110) umfasst, wobei der erste Aufnahmemechanismus (200) mit der ersten ortsfesten Platte (110) verbunden ist und der zweite Aufnahmemechanismus (300) mit der zweiten ortsfesten Platte (110) verbunden ist.

2. Beschickungsvorrichtung nach Anspruch 1, wobei der erste Aufnahmemechanismus (200) mindestens zwei erste Aufnahme- und Klemmbacken (210) umfasst, alle der ersten Aufnahme- und Klemmbacken (210) nebeneinander in einer ersten Richtung verteilt sind und einen justierbaren Abstand in der ersten Richtung aufweisen und die erste Richtung eine Breitenrichtung des Werkstücks (20) ist.

3. Beschickungsvorrichtung nach Anspruch 2, wobei der erste Aufnahmemechanismus (200) ferner einen ersten Antriebsteil (220) und einen Justierungsteil (230) umfasst und der Justierungsteil (230) beweglich mit den ersten Aufnahme- und Klemmbacken (210) verbunden ist, und der erste Antriebsteil (220) zum Antreiben des Justierungsteils (230) zur Bewegung und zum Antreiben der ersten Aufnahme- und Klemmbacken (210) zur Bewegung in der ersten Richtung verwendet wird.

4. Beschickungsvorrichtung nach Anspruch 3, wobei der Justierungsteil (230) Führungsräder (231) und Nachführungsplatten (232) umfasst, die Nachführungsplatte (232) mit einer Gleitrille (233) versehen ist, die jeder ersten Aufnahme- und Klemmbacke (210) entspricht, jede erste Aufnahme- und Klemmbacke (210) mit dem Führungsrad (231) versehen ist, die Führungsräder (231) gleitfähig in den entsprechenden Gleitrillen (233) angeordnet sind, alle der Gleitrillen (233) in Intervallen in einer zweiten Richtung verteilt sind und die zweite Richtung eine Dickenrichtung des Werkstücks (20) ist, und
der erste Antriebsteil (220) zum Antreiben der Nachführungsplatte (232) zur Bewegung in der zweiten Richtung, sodass das Führungsrad (231) relativ zu der Gleitrille (233) gleitet, und zum Antreiben der ersten Aufnahme- und Klemmbacken (210) zur Annäherung zueinander oder zur Bewegung weg voneinander in der ersten Richtung, verwendet wird.

5. Beschickungsvorrichtung nach Anspruch 4, wobei alle der Gleitrillen (231) eine gerade, Bogen-, Wellen- oder Zickzackform aufweisen.

6. Beschickungsvorrichtung nach Anspruch 4, wobei der erste Aufnahmemechanismus (200) ferner eine erste Führungsschiene (240) umfasst, die an der Basis (100) befestigt ist, wobei sich die erste Führungsschiene (240) in der ersten Richtung erstreckt, das Führungsrad (231) auf der gleichen Seite jeder ersten Aufnahme- und Klemmbacke (210) angeordnet ist und die Seite jeder Aufnahme- und Klemmbacke (210), die von dem Führungsrad (231) abgewandt ist, gleitfähig mit der ersten Führungsschiene (240) verbunden ist.

7. Beschickungsvorrichtung nach Anspruch 4, wobei die Beschickungsvorrichtung ferner einen Hilfsaufnahmemechanismus (400) umfasst, der an der Basis (100) angeordnet ist, und wenn der erste Aufnahmemechanismus (200) das Werkstück (20) aufnimmt und platziert, der Hilfsaufnahmemechanismus (400) zwischen einem Presszustand des Pressens des Schutzteils (10) und einem Haltezustand des Haltens einer Unterseite des Werkstücks (20) wechseln kann.

8. Beschickungsvorrichtung nach Anspruch 7, wobei der Hilfsaufnahmemechanismus (400) eine sich bewegende Plattform (410) und mindestens zwei Sondenstäbe (420) umfasst, wobei jeder Sondenstab (420) mit der sich bewegenden Plattform (410) verbunden ist und sich zusammen mit der sich bewegenden Plattform (410) bewegen kann, alle der Sondenstäbe (420) nebeneinander in einer dritten Richtung verteilt sind, die die erste Richtung schneidet, und die dritte Richtung eine Längenrichtung des Werkstücks (20) ist.

9. Beschickungsvorrichtung nach Anspruch 8, wobei die sich bewegende Plattform (410) eine horizontale sich bewegende Baugruppe und eine Hubbaugruppe umfasst, wobei die Hubbaugruppe mit den Sondenstäben (420) verbunden ist und zum Antreiben der Sondenstäbe (420) zum Hochfahren und Hinunterfahren in der zweiten Richtung verwendet wird, und die horizontale sich bewegende Baugruppe mit der Hubbaugruppe verbunden ist und zum Antreiben der Sondenstäbe (420) zur horizontalen Bewegung in der dritten Richtung verwendet wird.

10. Beschickungsvorrichtung nach Anspruch 8 oder 9, wobei alle der Sondenstäbe (420) mindestens eines von einer zylindrischen Struktur und einer prismatischen Struktur aufweisen.

11. Beschickungsvorrichtung nach einem der Ansprüche 8 bis 10, wobei eine Abmessung der Sondenstäbe (420) in der ersten Richtung größer oder gleich einer Abmessung des Schutzteils (10) ist.

12. Beschickungsvorrichtung nach einem der Ansprüche 7 bis 10, wobei der Hilfsaufnahmemechanismus (400) ferner einen Positionserkennungsteil umfasst, der an der Basis (100) angeordnet ist, wobei der Positionserkennungsteil zum Erkennen von Positionen der Sondenstäbe (420) verwendet wird und der Positionserkennungsteil ein Warnsignal aussendet, wenn die Sondenstäbe (420) auf eine Grenzposition hinunterfahren.

13. Batterieherstellungssystem, umfassend die Beschickungsvorrichtung nach einem der Ansprüche 1 bis 12.

## Revendications

1. Dispositif d'alimentation, utilisé pour prélever et placer une partie de protection (10) et une pièce (20) reçue dans la partie de protection (10), et comprenant :
une base (100) ;
un premier mécanisme de prélèvement (200), agencé sur la base (100) et utilisé pour prélever et placer la pièce (20) ; et
un second mécanisme de prélèvement (300), agencé sur la base (100) et utilisé pour prélever et placer la partie de protection (10) ;
le dispositif d'alimentation étant **caractérisé en ce que** la base (100) comprend une première plaque fixe (110) et une seconde plaque fixe (120) perpendiculaire à la première plaque fixe (110), le premier mécanisme de prélèvement (200) est raccordé à la première plaque fixe (110), et le second mécanisme de prélèvement (300) est raccordé à la seconde plaque fixe (120).

2. Dispositif d'alimentation selon la revendication 1, dans lequel le premier mécanisme de prélèvement (200) comprend au moins deux premières mâchoires de prélèvement et de serrage (210), toutes les premières mâchoires de prélèvement et de serrage (210) sont réparties côte à côte dans une première direction et présentent une distance réglable dans la première direction, et la première direction est une direction de largeur de la pièce (20).

3. Dispositif d'alimentation selon la revendication 2, dans lequel le premier mécanisme de prélèvement (200) comprend en outre une première partie d'entraînement (220) et une partie de réglage (230), et la partie de réglage (230) est raccordée de façon mobile aux premières mâchoires de prélèvement et de serrage (210) ; et la première partie d'entraînement (220) est utilisée pour entraîner la partie de réglage (230) à se déplacer, et entraîner les premières mâchoires de prélèvement et de serrage (210) à se déplacer dans la première direction.

4. Dispositif d'alimentation selon la revendication 3, dans lequel la partie de réglage (230) comprend des roues de guidage (231) et des plaques de suivi (232), la plaque de suivi (232) est dotée d'une rainure de coulissement (233) correspondant à chaque première mâchoire de prélèvement et de serrage (210), chaque première mâchoire de prélèvement et de serrage (210) est dotée de la roue de guidage (231), les roues de guidage (231) sont agencées de manière coulissante dans les rainures de coulissement (233) correspondantes, toutes les rainures de coulissement (233) sont réparties à intervalles dans une deuxième direction, et la deuxième direction est une direction d'épaisseur de la pièce (20) ; et
la première partie d'entraînement (220) est utilisée pour entraîner la plaque de suivi (232) à se déplacer dans la deuxième direction, de sorte que la roue de guidage (231) coulisse par rapport à la rainure de guidage (233), et entraîner les premières mâchoires de prélèvement et de serrage (210) à s'approcher ou s'éloigner l'une de l'autre dans la première direction.

5. Dispositif d'alimentation selon la revendication 4, dans lequel toutes les rainures de coulissement (233) présentent une forme droite, arquée, ondulée ou en zig-zag.

6. Dispositif d'alimentation selon la revendication 4, dans lequel le premier mécanisme de prélèvement (200) comprend en outre un premier rail de guidage (240) fixé sur la base (100), le premier rail de guidage (240) s'étend dans la première direction, la roue de guidage (231) est agencée sur le même côté de chaque mâchoire de prélèvement et de serrage (210), et le côté de chaque première mâchoire de prélèvement et de serrage (210) orienté à l'opposé de la roue de guidage (231) est raccordé de manière coulissante au premier rail de guidage (240).

7. Dispositif d'alimentation selon la revendication 4, dans lequel le dispositif d'alimentation comprend en outre un mécanisme de prélèvement auxiliaire (400) agencé sur la base (100), et lorsque le premier mécanisme de prélèvement (200) prélève et place la pièce (20), le mécanisme de prélèvement auxiliaire (400) peut commuter entre un état de pression pour la pression de la partie de protection (10) et un état de maintien pour le maintien d'un côté inférieur de la pièce (20).

8. Dispositif d'alimentation selon la revendication 7, dans lequel le mécanisme de prélèvement auxiliaire (400) comprend une plateforme mobile (410) et au moins deux tiges de sondage (420), chaque tige de sondage (420) est raccordée à la plateforme mobile (410) et peut se déplacer conjointement avec la plateforme mobile (410), toutes les tiges de sondage (420) sont réparties côte à côte dans une troisième direction croisant la première direction, et la troisième direction est une direction de longueur de la pièce (20).

9. Dispositif d'alimentation selon la revendication 8, dans lequel la plateforme mobile (410) comprend un ensemble de déplacement horizontal et un ensemble de levage, l'ensemble de levage est raccordé aux tiges de sondage (420) et est utilisé pour entraîner les tiges de sondage (420) à monter et descendre dans la deuxième direction, et l'ensemble de déplacement horizontal est raccordé à l'ensemble de levage et utilisé pour entraîner les tiges de sondage (420) à se déplacer horizontalement dans la troisième direction.

10. Dispositif d'alimentation selon la revendication 8 ou 9, dans lequel toutes les tiges de sondage (420) présentent une structure cylindrique et/ou une structure prismatique.

11. Dispositif d'alimentation selon l'une quelconque des revendications 8 à 10, dans lequel dans la première direction, une dimension des tiges de sondage (420) est supérieure ou égale à une dimension de la partie de protection (10).

12. Dispositif d'alimentation selon l'une quelconque des revendications 7 à 10, dans lequel le mécanisme de prélèvement auxiliaire (400) comprend en outre une partie de détection de position agencée sur la base (100), la partie de détection de position étant utilisée pour détecter des positions des tiges de sondage (420), et la partie de détection de position envoyant un signal d'avertissement lorsque les tiges de sondage (420) descendent à une position limite.

13. Système de fabrication de batterie, comprenant le dispositif d'alimentation selon l'une quelconque des revendications 1 à 12.
